# EUROPEAN PATENT APPLICATION

(11) **EP 2 402 570 A1**
(43) Date of publication of application: **04.01.2012**
(21) Application number: 09840780.2
(22) Date of filing: 26.02.2009
(51) Int. Cl.: F01N 3/02

(54) **EXHAUST CLEANER FOR INTERNAL COMBUSTION ENGINE**

(71) Applicant: Toyota Jidosha Kabushiki Kaisha, Toyota-shi, Aichi 471-8571 (JP)
(72) Inventor: SAKURAI, Kenji, Toyota-shi Aichi 471-8571 (JP); MIYASHITA, Shigeki, Toyota-shi Aichi 471-8571 (JP)
(74) Representative: Kuhnen & Wacker
(86) International application number: PCT/JP2009/053549
(87) International publication number: WO 2010/097927

(57) **Abstract**

The present invention relates to an exhaust gas purifying apparatus for an internal combustion engine. An object of the invention is to reduce the amount of particulate matter that flows out from a catalytic converter that continuously burns particulate matter contained in an exhaust gas. The exhaust gas purifying apparatus for an internal combustion engine of the present invention includes a catalytic converter that continuously burns particulate matter contained in an exhaust gas; particle amount acquisition means that acquires an inflow amount of particulate matter to the catalytic converter; and particle amount increase means that, when an acquired inflow amount of particulate matter is less than a predetermined threshold value α, changes a value of a control parameter of the internal combustion engine in a direction such that the inflow amount of particulate matter to the catalytic converter increases. The threshold value α corresponds to a value of a particulate matter inflow amount to the catalytic converter at a time when a particulate matter outflow amount from the catalytic converter is a local minimum in a graph showing a relation between a particulate matter inflow amount to the catalytic converter and a particulate matter outflow amount from the catalytic converter.

## Description

### Technical Field

The present invention relates to an exhaust gas purifying apparatus for an internal combustion engine.

### Background Art

The exhaust gas of an internal combustion engine includes minute particles, that is, particulate matter, consisting principally of carbon. Conventionally, an exhaust gas purifying apparatus is widely used in which a filter is disposed in an exhaust passage and particulate matter is collected by the filter. As particulate matter accumulates in the filter, the pressure loss (air-flow resistance) of the filter increases. Consequently, when using this kind of exhaust gas purifying apparatus that includes a filter, it is necessary to periodically execute regeneration control in order to burn and remove particulate matter that has accumulated in the filter.

Normally, a temperature of 550 °C or more is required in order to burn particulate matter that has accumulated in a filter. Japanese Patent Laid-Open No. 2005-90390 discloses technology that, when performing DPF (Diesel Particulate Filter) regeneration in a diesel engine that includes a diesel particulate filter, increases the temperature of the diesel particulate filter by retarding the fuel injection timing or performing post-injection of fuel or the like.

Patent Document 1: Japanese Patent Laid-Open No. 2005-90390
Patent Document 2: Japanese Patent Laid-Open No. 2007-64132

### Disclosure of the Invention

### Problems to be Solved by the Invention

In an exhaust gas purifying apparatus equipped with a PM filter as described above, when regenerating the PM filter, energy is required in order to heat the PM filter to a high temperature. There is thus the problem that the fuel consumption of the internal combustion engine deteriorates.

Therefore, an exhaust gas purifying apparatus has been proposed that, instead of using a PM filter, continuously burns (oxidizes) particulate matter in a catalytic converter without accumulating the particulate matter. With respect to this kind of exhaust gas purifying apparatus, there is a need to increase the particulate matter combustion efficiency at the catalytic converter, more specifically, to further decrease the amount of particulate matter that slips through the catalytic converter and is discharged.

The present invention was made in view of the above described problem, and an object thereof is to provide an exhaust gas purifying apparatus for an internal combustion engine that can reduce an amount of particulate matter that is discharged from a catalytic converter that continuously burns particulate matter contained in an exhaust gas.

### Solution to Problem

A first invention for achieving the above object is an exhaust gas purifying apparatus for an internal combustion engine, comprising:
a catalytic converter that continuously burns particulate matter contained in an exhaust gas of an internal combustion engine;
particle amount acquisition means that acquires an inflow amount of particulate matter to the catalytic converter; and
particle amount increase means that, when a value acquired by the particle amount acquisition means is less than a predetermined threshold value, executes particle amount increase control that changes a value of a control parameter of the internal combustion engine in a direction such that an inflow amount of particulate matter to the catalytic converter increases.

A second invention is in accordance with the first invention, when the value acquired by the particle amount acquisition means is greater than a second threshold value that is less than the threshold value, and is less than the threshold value, the particle amount increase means executes the particle amount increase control.

A third invention is in accordance with the first or the second invention, wherein the particle amount acquisition means estimates an inflow amount of particulate matter to the catalytic converter based on at least one of an engine speed, an engine load, a fuel injection timing, a fuel injection amount, and an intake air amount of the internal combustion engine.

A fourth invention is in accordance with any one of the first to third inventions, wherein the control parameter is a fuel injection timing.

A fifth invention is in accordance with any one of the first to the fourth inventions, wherein the catalytic converter has a characteristic such that, on a graph showing a relation between a particulate matter inflow amount to the catalytic converter and a particulate matter outflow amount from the catalytic converter, a section exists at which the particulate matter outflow amount from the catalytic converter decreases as the particulate matter inflow amount to the catalytic converter increases.

A sixth invention is in accordance with the fifth invention, wherein the threshold value corresponds to a value of the particulate matter inflow amount to the catalytic converter when the particulate matter outflow amount from the catalytic converter is a local minimum in the graph.

A seventh invention is in accordance with to the sixth invention, wherein:
the particle amount increase means executes the particle amount increase control when the value acquired by the particle amount acquisition means is greater than a second threshold value that is less than the threshold value, and is less than the threshold value; and
the second threshold value corresponds to a value of a particulate matter inflow amount to the catalytic converter when the particulate matter outflow amount from the catalytic converter is equal to a local minimum value of the particulate matter outflow amount from the catalytic converter in the graph.

An eighth invention is in accordance with any one of the first to seventh inventions, further comprising threshold value correction means that corrects the threshold value in accordance with a state of the catalytic converter.

A ninth invention is in accordance with any one of the first to eighth inventions, further comprising catalyst temperature increase means that, when the particle amount increase control is executed, increases a temperature of the catalytic converter by retarding an ignition timing.

A tenth invention is in accordance with any one of the first to ninth inventions, wherein the catalytic converter has as catalytic components at least one of a Pr material that has Pr (praseodymium) as a principal component and ceria, and an Nd material that has Nd (neodymium) as a principal component.

A eleventh invention is in accordance with any one of the first to tenth inventions, further comprising:
exhaust gas flow rate acquisition means that acquires a flow rate of exhaust gas that passes through the catalytic converter or a value that correlates therewith; and
inhibition means that inhibits execution of the particle amount increase control when a value acquired by the exhaust gas flow rate acquisition means exceeds a predetermined value.

### Advantages of the Invention

According to the first invention, when an inflow amount of particulate matter to a catalytic converter is acquired and the acquired value is less than a predetermined threshold value, particle amount increase control can be executed that changes a value of a control parameter of the internal combustion engine so that a particulate matter inflow amount to the catalytic converter increases. According to the findings of the present inventors, when the relation between a particulate matter inflow amount to the catalytic converter and a particulate matter outflow amount from the catalytic converter is illustrated on a graph, there is a section on the graph at which the particulate matter outflow amount from the catalytic converter decreases as the particulate matter inflow amount to the catalytic converter increases. Therefore, depending on the case, in some situations, increasing the inflow amount of particulate matter to the catalytic converter actually reduces the particulate matter outflow amount from the catalytic converter. According to the first invention, by applying this principle, it is possible to reduce the amount of particulate matter that flows out from a catalytic converter.

According to the second invention, the particle amount increase control can be executed when an acquired value for the amount of particulate matter is greater than a second threshold value that is less than the aforementioned threshold value, and is less than the aforementioned threshold value. If the inflow amount of particulate matter to the catalytic converter is extremely small, in some cases the amount of particulate matter that flows out from the catalytic converter is less when the particle amount increase control is not executed. According to the second invention, in such cases, execution of the particle amount increase control can be avoided. Thus, the overall amount of particulate matter flowing out from the catalytic converter can be more reliably reduced.

According to the third invention, the inflow amount of particulate matter to the catalytic converter can be estimated based on at least one of an engine speed, an engine load, a fuel injection timing, a fuel injection amount, and an intake air amount of the internal combustion engine. Therefore, an inflow amount of particulate matter to the catalytic converter can be easily acquired without providing a PM sensor or the like.

According to the fourth invention, the inflow amount of particulate matter to the catalytic converter can be easily controlled by modifying the fuel injection timing.

According to the fifth invention, in an exhaust gas purifying apparatus including a catalytic converter that has a characteristic such that, on a graph showing a relation between a particulate matter inflow amount to the catalytic converter and a particulate matter outflow amount from the catalytic converter, a section exists at which the particulate matter outflow amount from the catalytic converter decreases as the particulate matter inflow amount to the catalytic converter increases, the amount of particulate matter that flows out from the catalytic converter can be reliably reduced.

According to the sixth invention, by making the aforementioned threshold value a value that corresponds to a value of the particulate matter inflow amount to the catalytic converter when the particulate matter outflow amount from the catalytic converter is a local minimum on the graph, the amount of particulate matter that flows out from the catalytic converter can be reduced more reliably.

According to the seventh invention, when an inflow amount of particulate matter to the catalytic converter is less than a second threshold value, more specifically, when the amount of particulate matter that flows out from the catalytic converter is less if the particle amount increase control is not executed, execution of the particle amount increase control can be avoided. Thus, the overall amount of particulate matter flowing out from the catalytic converter can be more reliably reduced.

According to the eighth invention, the threshold value can be corrected in accordance with a state of the catalytic converter. Since it is therefore possible to set a more suitable threshold value in accordance with a state of the catalytic converter, the amount of particulate matter that flows out from the catalytic converter can be reliably reduced.

According to the ninth invention, the amount of particulate matter that flows out from the catalytic converter can be further reduced by increasing the temperature of the catalytic converter by retarding the ignition timing.

According to the tenth invention, particulate matter can be caused to react efficiently with active oxygen by using as catalytic components of the catalytic converter at least one of a Pr material that has Pr (praseodymium) as a principal component and ceria, and an Nd material that has Nd (neodymium) as a principal component. Thus, the amount of particulate matter that flows out from the catalytic converter can be further reduced.

According to the eleventh invention, execution of the particle amount increase control is inhibited when a flow rate of exhaust gas that passes through the catalytic converter or a value correlating therewith is equal to or greater than a predetermined value. In a region in which the flow rate of exhaust gas that passes through the catalytic converter is large to some extent, in some cases the amount of particulate matter that flows out from the catalytic converter is less when the particle amount increase control is not executed. According to the eleventh invention, in such cases, execution of the particle amount increase control can be avoided. Thus, the overall amount of particulate matter that flows out from the catalytic converter can be more reliably reduced.

### Brief Description of Drawings

Figure 1 is a view that illustrates an internal combustion engine according to Embodiment 1 of the present invention.
Figure 2 is a block diagram of a control apparatus that controls the internal combustion engine of Embodiment 1 of the present invention.
Figure 3 is a graph that illustrates the relation between a PM amount entering a catalyst and a PM amount leaving a catalyst.
Figure 4 is a flowchart illustrating a routine that is executed by Embodiment 1 of the present invention.
Figure 5 is a view that shows a map for correcting a threshold value α according to a space velocity SV.
Figure 6 is a flowchart illustrating a routine that is executed by Embodiment 2 of the present invention.
Figure 7 is a flowchart illustrating a routine that is executed by Embodiment 3 of the present invention.

### Description of Reference Numerals

- 10: internal combustion engine
- 12: intake valve
- 14: exhaust valve
- 16: intake pipe
- 18: throttle valve
- 20: intake manifold
- 22, 26: exhaust manifold
- 24: oxidation catalyst
- 28: exhaust pipe
- 30: underfloor catalyst
- 32: EGR passage
- 34: EGR catalyst
- 36: EGR valve
- 50: ECU

### Best Mode for Carrying Out the Invention

### Embodiment 1

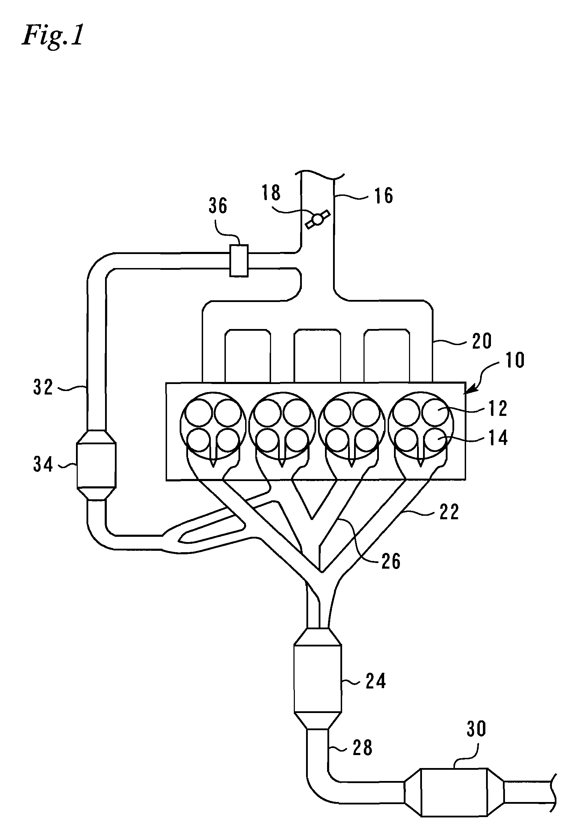

Figure 1 is a view that illustrates an internal combustion engine according to Embodiment 1 of the present invention. An internal combustion engine 10 illustrated in Figure 1 is used as a power source of a vehicle or the like. The internal combustion engine 10 of the present embodiment is a spark ignition internal combustion engine that includes a fuel injector (not illustrated) that injects fuel directly into the cylinders. The internal combustion engine 10 is an in-line four cylinder type engine. However, the number of cylinders and the arrangement of the cylinders are not particularly limited according to the present invention. Two intake valves 12 and two exhaust valves 14 are provided in each cylinder.

An intake pipe 16 is connected to the internal combustion engine 10. A throttle valve 18 for controlling an intake air amount is disposed partway along the intake pipe 16. Intake gas that is supplied from the intake pipe 16 is distributed by an intake manifold 20 and flows into each cylinder.

Exhaust gas discharged from a first cylinder and a fourth cylinder of the internal combustion engine 10 is collected by an exhaust manifold 22 and flows into an oxidation catalyst 24. Further, exhaust gas discharged from a second cylinder and a third cylinder is collected by an exhaust manifold 26 and flows into the oxidation catalyst 24. An exhaust pipe 28 is connected to the downstream side of the oxidation catalyst 24. An underfloor catalyst 30 is disposed partway along the exhaust pipe 28. In this connection, according to the present invention the exhaust manifold need not be of a divided type as described above.

An EGR (exhaust gas recirculation) passage 32 for performing exhaust gas recirculation that recirculates a part of the exhaust gas into the intake system is provided in the internal combustion engine 10 of the present embodiment. The upstream side of the EGR passage 32 is divided into two branches that are connected to the exhaust manifolds 22 and 26, respectively. The downstream side of the EGR passage 32 is connected to the intake pipe 16 at the downstream side of the throttle valve 18. An EGR catalyst 34 and an EGR valve 36 are disposed partway along the EGR passage 32.

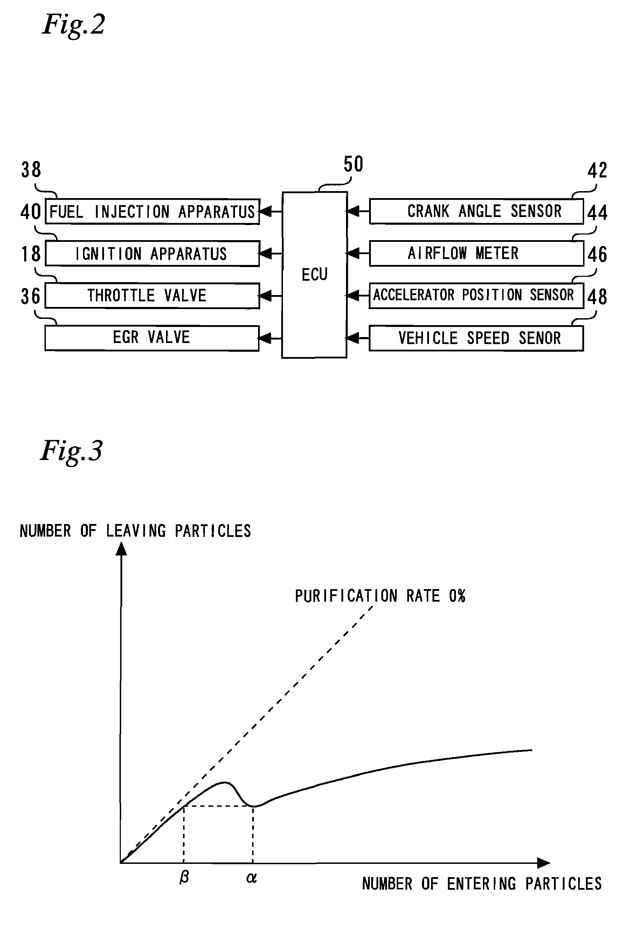

Figure 2 is a block diagram of a control apparatus that controls the internal combustion engine 10 of the present embodiment. The control apparatus of the present embodiment includes an ECU (Electronic Control Unit) 50. The ECU 50 is electrically connected to the throttle valve 18, the EGR valve 36, a fuel injection apparatus 38 for injecting fuel into the cylinders, and various actuators such as an ignition apparatus 40 for igniting an air-fuel mixture inside the cylinders. The ECU 50 is also electrically connected to various sensors including a crank angle sensor 42 that detects a rotation angle of a crank shaft of the internal combustion engine 10, an airflow meter 44 that detects an intake air amount, an accelerator position sensor 46 that detects an accelerator pedal position of a vehicle in which the internal combustion engine 10 is mounted, and a vehicle speed senor 48 that detects the vehicle speed.

The oxidation catalyst 24 and the EGR catalyst 34 have a function that purifies particulate matter contained in an exhaust gas. Particulate matter (hereunder, referred to as "PM") is composed of minute particles that consist principally of carbon, such as soot and SOF (soluble organic fraction). The oxidation catalyst 24 and the EGR catalyst 34 purify this kind of particulate matter by burning (oxidizing) the particulate matter to convert the particulate matter into CO₂ and the like. According to the present embodiment, by purifying PM using the oxidation catalyst 24, the amount of PM discharged to the atmosphere can be reduced. Further, by providing the EGR catalyst 34, inflow of PM to the intake system can be suppressed. It is thereby possible to reliably suppress the accumulation (adherence) of deposits caused by PM at the intake port or intake valve 12 or the like.

The oxidation catalyst 24 and the EGR catalyst 34 of the present embodiment are configured so as to continuously burn (cause reaction of) PM that enters therein, and not to accumulate PM as in the case of a filter. Preferred catalytic components of the oxidation catalyst 24 or the EGR catalyst 34 include Pt (platinum) or Pd (palladium) as precious metal components, and ceria, a Pr material that has Pr (praseodymium) as a principal component, or an Nd material that has Nd (neodymium) as a principal component as metal oxide components. Ceria or a Pr material has a property that efficiently generates active oxygen. Further, an Nd material has an excellent property (oxygen conductivity) for causing active oxygen to move along the surface thereof without purifying the active oxygen. Consequently, it is preferable that at least one of ceria and a Pr material is combined with an Nd material. By combining at least one of ceria and a Pr material with an Nd material, PM can be efficiently oxidized by active oxygen, and a particularly excellent PM purification performance can be obtained. In this case, it is further preferable to compound the components so that the weight of the Nd material is equal to or greater than the total weight of the ceria and Pr material.

A retaining material (for example, zeolite) for retaining the PM for a moment may be provided in the oxidation catalyst 24 and the EGR catalyst 34. Providing the retaining material makes it possible to momentarily retain the PM for a moment, and during that moment the PM can be more reliably combusted.

The amount of PM discharged from the internal combustion engine 10 varies significantly depending on the operation state. For example, the PM discharge amount is largest when operating at a high load, particularly accompanying acceleration. On the other hand, the PM discharge amount is small when operating at a low or medium load, although the amount increases somewhat accompanying acceleration.

The present inventors have conducted extensive studies aimed at improving the PM purification performance of the oxidation catalyst 24 and the EGR catalyst 34, and have obtained the following findings as a result. Normally, as the amount of PM flowing into the oxidation catalyst 24 or the EGR catalyst 34 (hereunder, referred to as "PM amount entering the catalyst") increases, the amount of PM that slips through the oxidation catalyst 24 or the EGR catalyst 34 and flows out from the oxidation catalyst 24 or the EGR catalyst 34 (hereunder, referred to as "PM amount leaving the catalyst") also increases. More specifically, as the PM amount entering the catalyst decreases, normally, the PM amount leaving the catalyst also decreases. However, according to experiments conducted by the present inventors, it was found that when the PM amount entering the catalyst is less than a certain threshold value, conversely, the PM amount leaving the catalyst increases. This phenomenon is described in further detail hereunder referring to Figure 3.

Figure 3 is a graph that illustrates the relation between a PM amount entering the catalyst and a PM amount leaving the catalyst. In Figure 3, the abscissa axis represents the number of particles included per unit volume in an exhaust gas that flows into a catalyst (PM amount entering the catalyst) and the axis of ordinates represents the number of particles included per unit volume in an exhaust gas that flows out from the catalyst (PM amount leaving the catalyst). If the PM is not purified at all, that is, if the PM purification rate is 0%, the PM amount leaving the catalyst is equal to the PM amount entering the catalyst. Hence, a straight line with an inclination of 45° that passes through the origin in Figure 3 represents a graph for a PM purification rate of 0%. In contrast, a graph when the PM purification rate is 100% matches the abscissa axis. Accordingly, the relation between the actual PM amount entering the catalyst and PM amount leaving the catalyst is between the abscissa axis and the straight line with an inclination of 45° that passes through the origin in Figure 3.

As shown in Figure 3, although the PM amount leaving the catalyst initially increases as the PM amount entering the catalyst is increased from zero, at a certain point the PM amount leaving the catalyst temporarily decreases before increasing again thereafter. More specifically, in the graph shown in Figure 3, a point exists at which the PM amount leaving the catalyst is a local minimum. In the following description, in the graph shown in Figure 3, a value of the PM amount entering the catalyst when the PM amount leaving the catalyst is the local minimum (that is, when the PM amount leaving the catalyst changes to an increasing amount from a decreasing amount in a case where the PM amount entering the catalyst has been increased) is referred to as "threshold value α".

Although the reason the above described characteristic appears in the relation between the PM amount entering the catalyst and the PM amount leaving the catalyst is not necessarily clear, it is considered that the PM is purified with good efficiency by the PM starting to combust (react) in a chain reaction when the PM amount entering the catalyst exceeds the threshold value α. Conversely, it can be considered that when the PM amount entering the catalyst is less than the threshold value α, it is difficult for such a chain reaction to occur, and on the contrary the PM amount leaving the catalyst increases.

When the relation between the PM amount entering the catalyst and the PM amount leaving the catalyst exhibits the above described characteristic, as illustrated in Figure 3, in a range in which the PM amount entering the catalyst is less than the threshold value α, a point exists at which the value of the PM amount leaving the catalyst is equal to the above described local minimum value of the PM amount leaving the catalyst. A value β of the PM amount entering the catalyst at this point is referred to as "second threshold value β" hereunder.

As will be understood from Figure 3, when the PM amount entering the catalyst is between the threshold value α and the second threshold value β, the PM amount leaving the catalyst increases compared to a case where the PM amount entering the catalyst is equal to the threshold value α. Accordingly, when the PM amount entering the catalyst is between the threshold value α and the second threshold value β, increasing the PM amount entering the catalyst up to the threshold value α can, in fact, reduce the PM amount leaving the catalyst. Therefore, according to the present embodiment, in a case where it is estimated that the PM amount entering the catalyst is between the threshold value α and the second threshold value β, control is executed that increases the PM amount entering the catalyst to the threshold value α. Hereunder, this control is referred to as "particle amount increase control".

According to the aforementioned particle amount increase control, processing is carried out that changes a control parameter of the internal combustion engine 10 that affects the PM amount entering the catalyst (or the PM discharge amount from the internal combustion engine 10) in a direction in which the PM amount entering the catalyst increases. The fuel injection timing from the fuel injector of the internal combustion engine 10 may be mentioned as an example of such a control parameter. As the fuel injection timing is advanced, there is the characteristic that the PM discharge amount from the internal combustion engine 10 increases because fuel injected from the fuel injector is liable to collide with the piston directly. Hence, the PM amount entering the catalyst can be increased by advancing the fuel injection timing.

### [Specific Processing in Embodiment 1]

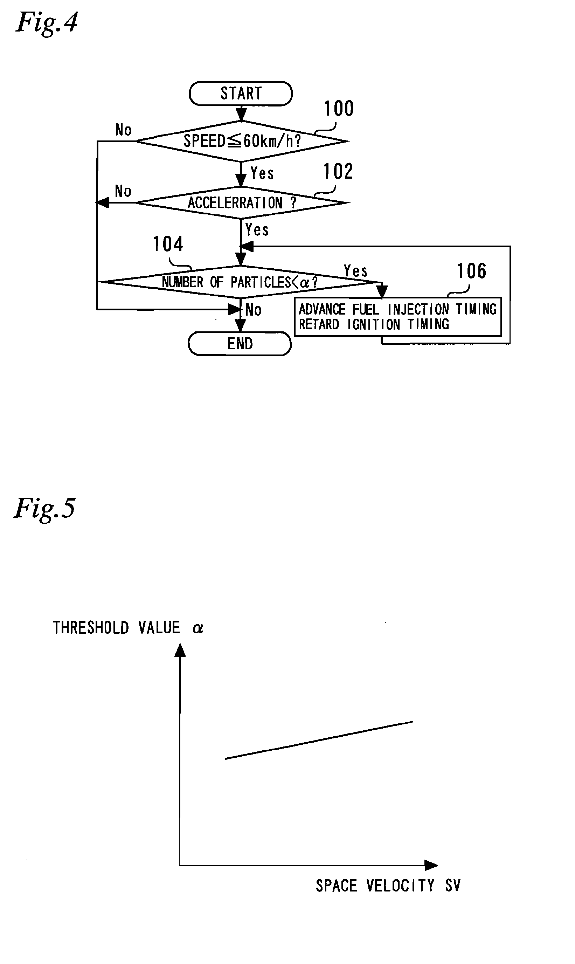

Figure 4 is a flowchart that illustrates a routine that the ECU 50 executes according to the present embodiment in order to implement the above described functions. It is assumed that this routine is repeatedly executed at intervals of a predetermined time period. According to the routine illustrated in Figure 4, first the ECU 50 determines whether or not the vehicle speed is less than or equal to 60km/h (step 100).

When the vehicle speed is in excess of 60km/h, it can be determined that the load of the internal combustion engine 10 is large to some extent, and therefore it can be determined that the amount of PM discharged from the internal combustion engine 10 is comparatively large. Thus, in the aforementioned step 100, if the vehicle speed is in excess of 60km/h it can be determined that the PM amount entering the catalyst is in excess of the threshold value α. In such a case, since it may be presumed that the circumstances are such that the PM amount leaving the catalyst will increase as the PM amount entering the catalyst increases, it is better not to execute the particle amount increase control. Therefore, in this case the ECU 50 ends the processing of the present routine at this point.

In contrast, in the aforementioned step 100, if the vehicle speed is less than or equal to 60km/h, it can be determined that there is a possibility that the PM amount entering the catalyst is less than the threshold value α. In this connection, although a configuration is adopted here in which the ECU 50 performs a determination based on the vehicle speed in step 100, the same determination may be performed based on the engine load of the internal combustion engine 10. The engine load can be calculated based on the intake air amount, the fuel injection amount, the engine speed and the like.

If the ECU 50 determines that the vehicle speed is less than or equal to 60km/h in step 100, the ECU 50 next determines whether or not acceleration is being performed (step 102). The ECU 50 can determine whether or not acceleration is being performed based on, for example, the position of the accelerator pedal (depression amount) or the rate of increase in the engine load. When the vehicle speed is less than or equal to 60km/h and acceleration is not being performed (a time of steady operation or of deceleration), it can be determined that the amount of PM discharged from the internal combustion engine 10 is small. Therefore, when it is determined that acceleration is not being performed in the aforementioned step 102, the ECU 50 can determine that the PM amount entering the catalyst is less than or equal to the second threshold value β. In such a case, since it may be presumed that the circumstances are such that the PM amount leaving the catalyst will increase as the PM amount entering the catalyst increases, it is better not to execute the particle amount increase control. Therefore, in this case the ECU 50 ends the processing of the present routine at this point.

In contrast, if it is determined that acceleration is being performed in the aforementioned step 102, it can be determined that there is a high possibility that the PM amount entering the catalyst is between the threshold value α and the second threshold value β. In this case, next, the ECU 50 executes processing for determining whether or not the PM amount entering the catalyst is less than the threshold value α (step 104). According to the present embodiment, the PM amount entering the catalyst is expressed as the number of PM particles included per unit volume in an exhaust gas that flows into the oxidation catalyst 24 or the EGR catalyst 34. According to the system of the present embodiment, exhaust gas discharged from the internal combustion engine 10 flows as it is into the oxidation catalyst 24 or the EGR catalyst 34. Hence, the value of the PM amount entering the catalyst is equal to the number of PM particles included per unit volume in an exhaust gas discharged from the internal combustion engine 10 (hereunder, referred to as "number of PM particles contained in gas leaving the engine"). According to the present embodiment, it is attempted to estimate the number of PM particles contained in gas leaving the engine based on the operating state of the internal combustion engine 10. Results that are previously obtained by experiments regarding the relation between the operating state (engine speed, engine load, fuel injection timing and the like) of the internal combustion engine 10 and the number of PM particles contained in gas leaving the engine are stored as a map in the ECU 50. In step 104, first, the number of PM particles contained in gas leaving the engine in the current operating state is calculated based on the map, and thereafter the value of the calculated number of PM particles contained in gas leaving the engine is compared with the threshold value α.

If it is determined in step 104 that the number of PM particles contained in gas leaving the engine is less than the threshold value α, it can be predicted that the PM amount leaving the catalyst will decrease from the current state by increasing the number of PM particles contained in gas leaving the engine up to the threshold value α. More specifically, in this case, it can be determined that the PM amount leaving the catalyst can be reduced by executing the particle amount increase control. Therefore, in this case, the fuel injection apparatus 38 is controlled so as to advance the fuel injection timing in order to increase the number of PM particles contained in gas leaving the engine (step 106). In step 106, the amount by which to advance the fuel injection timing may be set to a predetermined value or, alternatively, a configuration may be adopted in which the amount by which to advance the fuel injection timing is determined according to a deviation between the threshold value α and the number of PM particles contained in gas leaving the engine as calculated in the aforementioned step 104. Further, according to the present embodiment, in step 106, control that retards the ignition timing is performed by the ignition apparatus 40 in conjunction with the aforementioned control. By retarding the ignition timing, the exhaust temperature can be raised and the bed temperature of the catalyst can be increased. Thus, the PM purification rate can be further increased.

When the processing of the aforementioned step 106 has been executed, next, the processing of step 104 is executed again. In step 104, if it is determined that the calculated number of PM particles contained in gas leaving the engine has reached the threshold value α, the processing of the present routine ends.

When it is estimated that the PM amount entering the catalyst is between the threshold value α and the second threshold value β according to the processing of the routine illustrated in Figure 4 as described above, control is executed that increases the PM amount entering the catalyst to the threshold value α by daringly increasing the amount of PM discharged from the internal combustion engine 10. It is thereby possible to decrease the amount of PM that flows out from the oxidation catalyst 24 or the EGR catalyst 34. Thus, the amount of PM discharged to the atmosphere can be reduced, and the accumulation of PM deposits in the EGR passage 32 or the intake system can be suppressed.

According to the present invention, a configuration may be adopted that corrects the threshold value α according to the state of the oxidation catalyst 24 or the EGR catalyst 34. For example, a configuration may be adopted that corrects the threshold value α according to a space velocity SV of the oxidation catalyst 24 or the EGR catalyst 34. Figure 5 is a view that shows a map for correcting the threshold value α according to the space velocity SV. Since the time that exhaust gas remains inside the catalyst increases as the space velocity SV decreases, even if the inflow amount of PM is small, it is easy for a chain reaction to occur. Hence, there is a tendency for the threshold value α to decrease as the space velocity SV decreases. In order to correspond to this tendency, in the processing of the aforementioned step 104, the space velocity SV may be calculated and the threshold value α may be obtained based on the map shown in Figure 5.

In this connection, the space velocity SV of the oxidation catalyst 24 is a value obtained by dividing the volume of the oxidation catalyst 24 by the flow rate of exhaust gas that passes through the oxidation catalyst 24. The flow rate of exhaust gas that passes through the oxidation catalyst 24 can be calculated based on the intake air amount, the fuel injection amount, the engine speed or the like of the internal combustion engine 10. The space velocity SV of the EGR catalyst 34 is a value obtained by dividing the volume of the EGR catalyst 34 by the flow rate of exhaust gas that passes through the EGR catalyst 34. The flow rate of exhaust gas that passes through the EGR catalyst 34 can be calculated based on the intake air amount, the fuel injection amount, or the engine speed of the internal combustion engine 10, or the degree of opening of the EGR valve 36 or the like.

According to the present invention, the threshold value α may also be corrected according to another parameter, and not just the space velocity SV. For example, the threshold value α may be corrected based on the bed temperature of the oxidation catalyst 24 or the EGR catalyst 34. The second threshold value β may also be corrected in a similar manner in accordance with the space velocity SV or another parameter.

Although according to the present embodiment a configuration is adopted in which the PM amount entering the catalyst (number of PM particles contained in gas leaving the engine) is obtained by estimation based on the engine operating state, the present invention is not limited to this configuration. More specifically, according to the present invention, a configuration may also be adopted in which a PM sensor is provided that measures a PM amount in an exhaust gas, and the PM amount entering the catalyst is directly detected by the PM sensor.

Furthermore, although according to the present embodiment a configuration is adopted in which the PM amount entering the catalyst is increased by advancing the fuel injection timing when the PM amount entering the catalyst is less than the threshold value α, according to the present invention a configuration may also be adopted in which the PM amount entering the catalyst is increased by changing the value of another control parameter of the internal combustion engine 10. The EGR rate may be mentioned as an example of another control parameter.

In addition, although according to the present embodiment a configuration is adopted in which the PM amount entering the catalyst is expressed as the number of PM particles included per unit volume in an exhaust gas, the present invention is not limited thereto. For example, the PM amount entering the catalyst may be expressed as the PM weight included per unit volume in an exhaust gas, the total number of PM particles flowing into the catalyst per unit time, or the total PM weight flowing into the catalyst per unit time.

In the above described Embodiment 1, the oxidation catalyst 24 or EGR catalyst 34 corresponds to a "catalytic converter" of the first invention, the threshold value α corresponds to a "predetermined threshold value" of the first and sixth inventions, the fuel injection timing corresponds to a "control parameter" of the first invention, and the second threshold value β corresponds to a "second threshold value" of the second and seventh inventions. Further, "particle amount acquisition means" according to the first and third inventions is realized by the ECU 50 executing the processing of the aforementioned step 104, "particle amount increase means" according to the first invention is realized by the ECU 50 executing the processing of the aforementioned step 106, "catalyst temperature increase means" according to the tenth invention is realized by the ECU 50 executing the processing of the aforementioned step 106, and "threshold value correction means" according to the eighth invention is realized by the ECU 50 calculating the threshold value α according to the map shown in Figure 3.

### Embodiment 2

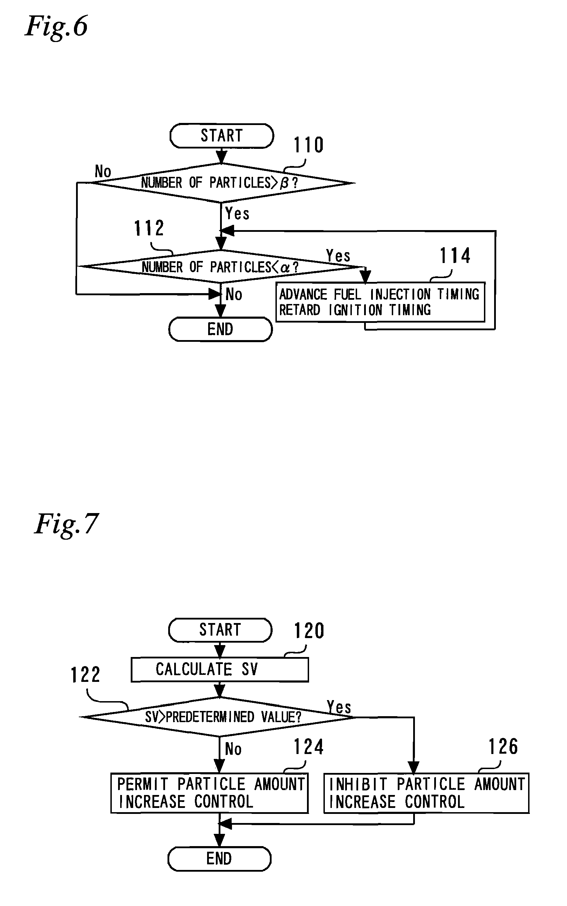

Next, Embodiment 2 of the present invention is described referring to Figure 6. The description of Embodiment 2 centers on the differences with respect to Embodiment 1, and a description of matters that are the same as in Embodiment 1 is simplified or omitted. The present embodiment can be realized by causing the ECU 50 to execute a routine illustrated in Figure 6, described later, instead of the routine illustrated in Figure 4, using a similar hardware configuration as that of the above described Embodiment 1

According to the foregoing Embodiment 1, it is determined whether or not the PM amount entering the catalyst is greater than the second threshold value β in accordance with whether or not acceleration is being performed. In contrast, according to the present embodiment, the number of PM particles contained in gas leaving the engine is directly compared with the second threshold value β.

Figure 6 is a flowchart of a routine that the ECU 50 executes according to the present embodiment to realize the above described function. According to the routine shown in Figure 6, first, similarly to Embodiment 1, the number of PM particles contained in gas leaving the engine is estimated based on the engine operating state. The estimated value of the number of PM particles contained in gas leaving the engine is then compared with the second threshold value β (step 110).

If the number of PM particles contained in gas leaving the engine is less than or equal to the second threshold value β in the aforementioned step 110, it can be assumed that the situation is one in which the PM amount leaving the catalyst increases as the PM amount entering the catalyst increases. Hence, it is better not to execute the particle amount increase control in this case. Therefore, the processing of the present routine ends at this point.

In contrast, when the number of PM particles contained in gas leaving the engine exceeds the second threshold value β in the aforementioned step 110, next the number of PM particles contained in gas leaving the engine is compared with the threshold value α (step 112).

If the number of PM particles contained in gas leaving the engine is less than the threshold value α in the aforementioned step 112, it can be predicted that increasing the number of PM particles contained in gas leaving the engine to the threshold value α will decrease the PM amount leaving the catalyst from the current amount. More specifically, in this case, it can be determined that the PM amount leaving the catalyst can be decreased by executing the particle amount increase control. Therefore, in this case, next, the ECU 50 executes control that advances the fuel injection timing in order to increase the number of PM particles contained in gas leaving the engine (step 114). The processing in step 114 is the same as in step 106 of Embodiment 1. When the processing of step 114 has been executed, the processing of step 112 is executed again.

In contrast, if the number of PM particles contained in gas leaving the engine is equal to or greater than the threshold value α in the above step 112, it can be assumed that the situation is one in which the PM amount leaving the catalyst increases as the PM amount entering the catalyst increases. Hence, it is better not to execute the particle amount increase control. Therefore, in this case, the processing of the present routine ends at this point.

In this connection, in the above described Embodiment 2, "particle amount increase means" according to the second invention is realized by the ECU 50 executing processing of the routine illustrated in Figure 6.

### Embodiment 3

Next, Embodiment 3 of the present invention is described referring to Figure 7. The description of Embodiment 3 centers on the differences with the above described Embodiments 1 and 2, and a description of matters that are the same as in Embodiments 1 and 2 is simplified or omitted.

As described above, a catalytic converter that burns PM exhibits the characteristic illustrated in Figure 3. More specifically, in a graph illustrating the relation between a PM amount entering the catalyst and a PM amount leaving the catalyst, a section exists at which the PM amount leaving the catalyst decreases as the PM amount entering the catalyst increases.

However, according to the findings of the present inventors, in a region in which the space velocity SV of the catalytic converter is large to a certain extent, there are cases in which the catalytic converter no longer exhibits the characteristic illustrated in Figure 3. More specifically, in a region in which the space velocity SV of the catalytic converter is large to a certain extent, the catalytic converter exhibits a characteristic whereby a PM amount leaving the catalyst simply increases as the PM amount entering the catalyst increases. There is no necessity to execute the aforementioned particle amount increase control in such a region. Thus, according to the present embodiment, a value of the space velocity SV when the characteristic shown in Figure 3 is no longer exhibited is identified in advance, and a configuration is adopted that inhibits execution of the particle amount increase control in a region in which the space velocity SV is greater than that value.

Figure 7 is a flowchart of a routine that the ECU 50 executes according to the present embodiment in order to implement the above described function. According to the routine shown in Figure 7, first, the respective space velocities SV of the oxidation catalyst 24 and the EGR catalyst 34 are calculated (step 120). The method of calculating the space velocity SV of the oxidation catalyst 24 and the EGR catalyst 34 is as described in Embodiment 1.

Subsequently, it is determined whether or not the space velocity SV that is calculated in step 120 exceeds a predetermined value (step 122). If the space velocity SV does not exceed the predetermined value in step 122, it can be determined that the relation between the PM amount entering the catalyst and the PM amount leaving the catalyst is in a region that exhibits the characteristic as shown in Figure 3, and thus the particle amount increase control is effective. Therefore, in this case, execution of the particle amount increase control is permitted (step 124). More specifically, in step 124, execution of the routine illustrated in Figure 4 or Figure 6 described above is permitted.

In contrast, if the space velocity SV exceeds the predetermined value in the aforementioned step 122, it can be determined that the relation between the PM amount entering the catalyst and the PM amount leaving the catalyst is in a region that does not exhibit the characteristic shown in Figure 3, and thus the particle amount increase control is not effective. Therefore, in this case, execution of the particle amount increase control is inhibited (step 126). More specifically, in step 126, execution of the routine illustrated in Figure 4 or Figure 6 described above is inhibited.

In this connection, according to the present embodiment, execution of the particle amount increase control may be inhibited when the space velocity SV of at least one of the oxidation catalyst 24 and the EGR catalyst 34 exceeds the predetermined value, or execution of the particle amount increase control may be inhibited only when the space velocity SV of both the oxidation catalyst 24 and the EGR catalyst 34 exceeds the predetermined value. Further, a configuration may be adopted that focuses on only the space velocity SV of either one of the oxidation catalyst 24 and the EGR catalyst 34 from the beginning, and executes the routine shown in Figure 7. Since the space velocity SV correlates with the flow rate of exhaust gas that passes through the catalytic converter, the routine illustrated in Figure 7 can be executed based on a value of the exhaust gas flow rate instead of the value of the space velocity SV.

In the above described Embodiment 3, "exhaust gas flow rate acquisition means" according to the eleventh invention is realized by the ECU 50 executing the processing of the aforementioned step 120, and "inhibition means" according to the eleventh invention is realized by the ECU 50 executing the processing of the aforementioned steps 122 and 126.

## Claims

1. An exhaust gas purifying apparatus for an internal combustion engine, comprising:
a catalytic converter that continuously burns particulate matter contained in an exhaust gas of an internal combustion engine;
particle amount acquisition means that acquires an inflow amount of particulate matter to the catalytic converter; and
particle amount increase means that, when a value acquired by the particle amount acquisition means is less than a predetermined threshold value, executes particle amount increase control that changes a value of a control parameter of the internal combustion engine in a direction such that an inflow amount of particulate matter to the catalytic converter increases.

2. The exhaust gas purifying apparatus for an internal combustion engine according to claim 1, wherein when the value acquired by the particle amount acquisition means is greater than a second threshold value that is less than the threshold value, and is less than the threshold value, the particle amount increase means executes the particle amount increase control.

3. The exhaust gas purifying apparatus for an internal combustion engine according to claim 1 or 2, wherein the particle amount acquisition means estimates an inflow amount of particulate matter to the catalytic converter based on at least one of an engine speed, an engine load, a fuel injection timing, a fuel injection amount, and an intake air amount of the internal combustion engine.

4. The exhaust gas purifying apparatus for an internal combustion engine according to any one of claims 1 to 3, wherein the control parameter is a fuel injection timing.

5. The exhaust gas purifying apparatus for an internal combustion engine according to any one of claims 1 to 4, wherein the catalytic converter has a characteristic such that, on a graph showing a relation between a particulate matter inflow amount to the catalytic converter and a particulate matter outflow amount from the catalytic converter, a section exists at which the particulate matter outflow amount from the catalytic converter decreases as the particulate matter inflow amount to the catalytic converter increases.

6. The exhaust gas purifying apparatus for an internal combustion engine according to claim 5, wherein the threshold value corresponds to a value of the particulate matter inflow amount to the catalytic converter when the particulate matter outflow amount from the catalytic converter is a local minimum in the graph.

7. The exhaust gas purifying apparatus for an internal combustion engine according to claim 6, wherein:
the particle amount increase means executes the particle amount increase control when the value acquired by the particle amount acquisition means is greater than a second threshold value that is less than the threshold value, and is less than the threshold value; and
the second threshold value corresponds to a value of a particulate matter inflow amount to the catalytic converter when the particulate matter outflow amount from the catalytic converter is equal to a local minimum value of the particulate matter outflow amount from the catalytic converter in the graph.

8. The exhaust gas purifying apparatus for an internal combustion engine according to any one of claims 1 to 7, further comprising threshold value correction means that corrects the threshold value in accordance with a state of the catalytic converter.

9. The exhaust gas purifying apparatus for an internal combustion engine according to any one of claims 1 to 8, further comprising catalyst temperature increase means that, when the particle amount increase control is executed, increases a temperature of the catalytic converter by retarding an ignition timing.

10. The exhaust gas purifying apparatus for an internal combustion engine according to any one of claims 1 to 9, wherein the catalytic converter has as catalytic components at least one of a Pr material that has Pr (praseodymium) as a principal component and ceria, and an Nd material that has Nd (neodymium) as a principal component.

11. The exhaust gas purifying apparatus for an internal combustion engine according to any one of claims 1 to 10, further comprising:
exhaust gas flow rate acquisition means that acquires a flow rate of exhaust gas that passes through the catalytic converter or a value that correlates therewith; and
inhibition means that inhibits execution of the particle amount increase control when a value acquired by the exhaust gas flow rate acquisition means exceeds a predetermined value.
